# EUROPÄISCHE PATENTSCHRIFT

(11) **EP 0 908 649 B1**
(45) Veröffentlichungstag und Bekanntmachung des Hinweises auf die Patenterteilung: **16.04.2003**
(21) Anmeldenummer: 98109936.9
(22) Anmeldetag: 30.05.1998
(51) Int. Cl.: F16J 15/32

(54) **Dichtungsanordnung**
Sealing device
Dispositif de joint

(30) Priorität: 09.10.1997 DE 19744554
(43) Veröffentlichungstag der Anmeldung: 14.04.1999
(73) Patentinhaber: Carl Freudenberg KG, 69469 Weinheim (DE)
(72) Erfinder: Freitag, Edgar, Dr., 34613 Schwalmstadt (DE)

(56) Entgegenhaltungen:
- DE-A- 3 126 421
- DE-B- 1 245 659
- DE-C- 4 333 047
- US-A- 4 466 621

## Beschreibung

### Technisches Gebiet

Die Erfindung betrifft eine Dichtungsanordnung gemäß dem Oberbegriff von Anspruch 1.

### Stand der Technik

Eine solche Dichtungsanordnung ist aus der DE 43 33 047 C1 bekannt. Die Diagonaldichtung ist durch einen Dichtring aus elastomerem Werkstoff gebildet, der in radialer und axialer Richtung herstellungsbedingt derart bemessen ist, daß er während der bestimmungsgemäßen Verwendung unter radialer und axialer Vorspannung innerhalb seines Einbauraums gehalten ist.

### Darstellung der Erfindung

Der Erfindung liegt die Aufgabe zugrunde, eine Dichtungsanordnung der vorbekannten Art derart weiterzuentwickeln, daß die Reibung zwischen der Diagonaldichtung und den abzudichtenden Flächen minimiert wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es im Rahmen der vorliegenden Erfindung vorgesehen, daß die Diagonaldichtung aus zwei einander im Einbauraum diagonal gegenüberliegend angeordneten Gleitelementen mit im wesentlichen dreieckförmigem Querschnitt besteht, die mit ihren Gleitflächen jeweils den Rotor und den Stator unter elastischer Vorspannung dichtend berühren, und daß die Gleitelemente durch ein Anpreßelement aus elastomerem Werkstoff auf einander abgestützt sind. Bevorzugt bestehen die Gleitelemente aus einem selbstschmierenden Werkstoff, beispielsweise Polytetraflourethylen (PTFE). Der selbstschmierende Werkstoff weist zusammen mit den abzudichtenden, metallischen Flächen bevorzugt einen Reibungskoeffizient µ auf, der im Bereich zwischen 0,08 und 0,15 liegt. Die Reibung ist wesentlich geringer als bei geometrisch vergleichbaren Elastomer-Dichtungen auf metallischen Werkstoffen. Außerdem ist von Vorteil, daß selbstschmierende Werkstoffe auch ausgezeichnete Notlaufeigenschaften aufweisen, wenn die Schmierung der Dichtung beeinträchtigt ist. Für den Fall, daß PTFE-Gleitringe zur Anwendung gelangen, glasiert deren Oberfläche nach einem sehr geringen, anfänglichen Verschleiß und wird sehr hart. Durch die Minimierung der Reibung werden stick-slip Effekte bei Betätigung des Schwenkantriebs vermieden; der Rotor ist im Stator besonders feinfühlig schwenkbar.

Bei der erfindungsgemäßen Diagonaldichtung besteht nur das Anpreßelement aus elastomerem Werkstoff und sorgt für die dichtende Anpressung der Gleitelemente unter elastischer Vorspannung an den abzudichtenden Flächen, die den Einbauraum begrenzen. Durch die über eine Steuerdruckleitung druckbeaufschlagbaren Druckkammern ist von Vorteil, daß die Diagonaldichtung innerhalb der beschriebenen Dichtungsanordnung zur sicheren Abdichtung von Drücken bis zu einem Druck von etwa 250 bar zur Anwendung gelangen kann. Derartige Drücke sind in Schwenkantrieben üblich. Schwenkantriebe werden zur Umwandlung von hydraulischer oder pneumatischer Druckenergie in kinetische Energie eingesetzt. Die Druckenergie wird genutzt, um Schwenkbewegungen des Rotors, relativ zum Stator zu erzeugen. Ein Anwendungsbeispiel ist die Verwendung von Schwenkantrieben zur Stabilisierung der Bewegung von Karosserien bei Kurvenfahrt von Kraft- oder Schienenfahrzeugen, wobei beispielsweise durch eine Steuerungselektronik die fliehkraftbedingte Neigung der Karosserie relativ zum Fahrwerk reduziert oder vollständig ausgeglichen wird.

Zur Funktion der Dichtungsanordnung wird folgendes ausgeführt:

Die Abmessungen der erfindungsgemäßen Diagonaldichtung in radialer und axialer Richtung sind derart bemessen, daß sie während der bestimmungsgemäßen Verwendung unter radialer und axialer Vorspannung innerhalb des Einbauraums gehalten ist. Die radiale und axiale Vorspannung wird durch das aus einem elastomeren Werkstoff bestehende Anpreßelement bewirkt. Ohne äußere Druckbeaufschlagung der beiden Druckkammern im Einbauraum ist die Diagonaldichtung geeignet, Drücke bis etwa 80 bar sicher abzudichten.

Um demgegenüber höhere Drücke abdichten zu können, ist durch eine Steuerdruckleitung ein druckmittelbeaufschlagbares hydraulisches Steuermedium, beispielsweise ein Hydrauliköl, in die beiden Druckkammern beiderseits der Symmetrieachse einspeisbar. In Abhängigkeit von der Größe des relativen Überdrucks, der für eine sichere Abdichtung des abzudichtenden Mediums innerhalb des abzudichtenden Raums benötigt wird, erfolgt eine Druckerhöhung innerhalb der Druckkammern, die eine proportional vergrößerte Anpressung des Dichtrings an die Oberflächen des abzudichtenden Rotors und des Stators bewirkt. Durch die Gleitelemente, die bevorzugt aus PTFE bestehen, bleibt die Reibung zwischen der Diagonaldichtung und den angrenzenden, abzudichtenden Flächen, weitgehend unabhängig von der Höhe der Druckbeaufschlagung der beiden Druckkammern, im wesentlichen konstant. Auch bei einer hohen Druckbeaufschlagung der beiden Druckkammern ist der abrasive Verschleiß der Gleitelemente vernachlässigbar gering, so daß die erfindungsgemäße Dichtungsanordnung gleichbleibend gute Gebrauchseigenschaften während einer langen Gebrauchsdauer aufweist.

Gemäß einer vorteilhaften Ausgestaltung erstreckt sich die Ausnehmung im wesentlichen quer zu der Symmetrieachse und ist im Anpreßelement angeordnet. Eine solche Diagonaldichtung weist einen einfachen Aufbau auf und ist einfach und kostengünstig herstellbar.

Gemäß einer vorteilhaften Ausgestaltung kann die Ausnehmung durch eine in Richtung des angrenzenden Gleitelements offenen Nut gebildet sein. Die Ausnehmung kann dadurch während der Herstellung des aus elastomerem Werkstoff bestehenden Anpreßelements bereits eingeformt werden. Bevorzugt gelangen auf der dem ersten Gleitelement und dem zweiten Gleitelement zugewandten Seite jeweils zumindest zwei gleichmäßig in Umfangsrichtung verteilte Nuten zur Anwendung, wobei die dem ersten Gleitelement zugewandten Nuten bezogen auf die dem zweiten Gleitelement zugewandten Nuten um 90° versetzt zueinander angeordnet sind. Die Ausnehmungen sind derart bemessen, daß bei Druckbeaufschlagung von nur einer Druckkammer auch in der anderen Druckkammer praktisch zeitgleich der selbe Druck herrscht. Das Steuermedium wird bevorzugt durch eine Hydraulikflüssigkeit gebildet.

Das Anpreßelement und die Gleitelemente können formschlüssig verbunden sein. Hierbei ist von Vorteil, daß die gesamte Diagonaldichtung, bestehend aus den Gleitelementen und dem Anpreßelement durch eine vormontierbare Einheit gebildet ist, wobei die Einzelteile vor ihrer Montage in die Dichtungsanordnung ineinander einschnappbar sind. Die Gleitelemente bestehen bevorzugt aus PTFE. Davon abweichende, selbstschmierende Werkstoffe, sind ebenfalls zur Herstellung der Gleitelemente verwendbar.

Zumindest eine der Druckkammern ist mit einer Steuerdruckleitung verbunden, wobei bevorzugt die dem Stator zugewandte Druckkammer mit der Steuerdruckleitung verbunden ist. Hierbei ist von Vorteil, daß die Zugänglichkeit zu dieser Druckkammer im Vergleich zu der benachbarten Druckkammer wesentlich besser ist. Sowohl der Stator als auch die innerhalb des Einbauraums angeordnete Diagonaldichtung sind relativ zueinander ortsfest, wobei der Rotor, bezogen auf den Stator und die Diagonaldichtung schwenkbeweglich gelagert ist.

Der abzudichtende Raum ist in axialer Richtung beiderseits bevorzugt durch identisch ausgebildete Diagonaldichtungen abgedichtet. Die Diagonaldichtung, der Stator und der Rotor sind bevorzugt zu einer Radialebene spiegelbildlich angeordnet. Durch eine derartige Ausgestaltung wird eine bezüglich des Herstellungsaufwands günstigere Fertigung der Dichtungsanordnung bewirkt.

Die zuvor beschriebene Dichtungsanordnung ist als Drehdruckdichtung zur Abdichtung von Schwenkantrieben ausgebildet und dichtet Drücke innerhalb des abzudichtenden Raums von etwa 200 bar problemlos ab.

### Kurzbeschreibung der Zeichnung

Die erfindungsgemäße Dichtungsanordnung wird nachfolgend anhand der Zeichnungen weiter verdeutlicht. Es zeigen:
Figur 1 einen Schwenkantrieb, bei dem die erfindungsgemäße Dichtungsanordnung zur Anwendung gelangt,
Figur 2 einen Ausschnitt aus dem Schwenkantrieb gemäß Figur 1 in vergrößerter Darstellung, wobei die Diagonaldichtung im eingebauten Zustand gezeigt ist,
Figur 3 den Ausschnitt aus Figur 2, wobei zur Verdeutlichung der elastischen Vorspannung, mit der die Diagonaldichtung in Figur 2 im Einbauraum angeordnet ist, die Diagonaldichtung in herstellungsbedingter Größe gezeigt ist,
Figur 4 eine Explosionszeichnung, in der die Einzelteile, aus der die Diagonaldichtung besteht, jeweils als Einzelteile dargestellt sind.
Figur 5 eine Ansicht des Anpreßelements aus Figur 4 aus Richtung X.

### Ausführung der Erfindung

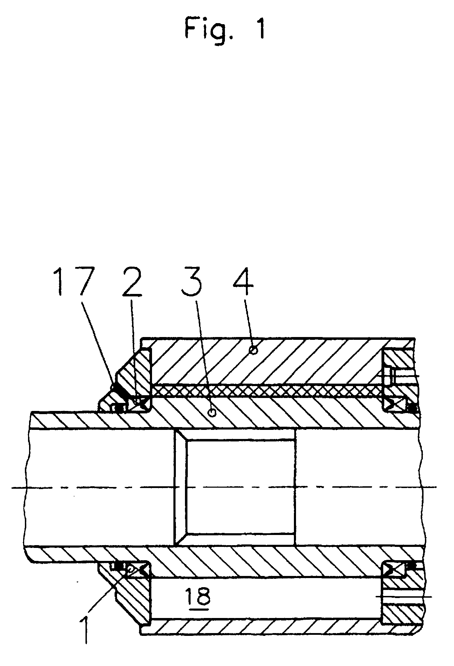

In Figur 1 ist ein Schwenkantrieb gezeigt, umfassend einen Stator 4, der einen Rotor 3 außenumfangsseitig mit radialem Abstand umschließt, wobei der Rotor 3 und der Stator 4 durch ein Ausführungsbeispiel der erfindungsgemäßen Dichtungsanordnung gegeneinander abgedichtet sind. Der Rotor 3 ist als stufenförmig abgesetzte Welle ausgebildet, wobei der Stator 4 das Gehäuse des Schwenkantriebs bildet. Die Diagonaldichtung 1 im Einbauraum 2 ist nur schematisch dargestellt. Die Steuerdruckleitung ist mit dem Bezugszeichen 17 versehen.

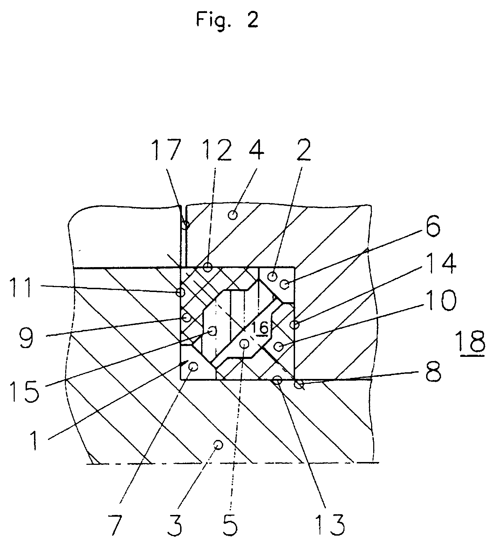

In Figur 2 ist die Dichtungsanordnung aus Figur 1 in vergrößerter Darstellung gezeigt. Die Dichtungsanordnung umfaßt eine Diagonaldichtung 1, die aus den PTFE-Gleitelementen 9, 10 besteht und aus dem Anpreßelement 15. Das Anpreßelement 15 besteht aus einem elastomeren Werkstoff und ist unter elastischer Vorspannung zwischen den Gleitelementen 9, 10 angeordnet. Durch das Anpreßelement 15 berühren die Gleitelemente 9, 10 mit ihrem Gleitflächen 11, 12, 13, 14 jeweils den Rotor 3 und den Stator 4 unter dichtender Vorspannung. Der Einbauraum 2 ist durch die Steuerdruckleitung 17 mit einem hydraulischen Steuermedium druckbeaufschlagbar.

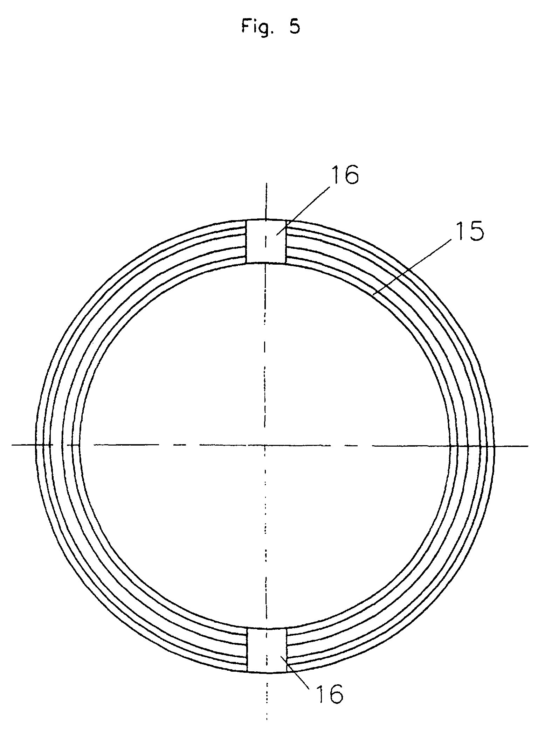

Die Diagonaldichtung 1 ist in diesem Ausführungsbeispiel, wie in den Figuren 5 und 6 gezeigt, mit vier Ausnehmungen 5 versehen, wobei jeweils zwei Ausnehmungen 5 innenseitig des Anpreßelements 15 und zwei Ausnehmungen 5 außenseitig des Anpreßelements 15 angeordnet sind und wobei die innenund außenseitig angeordneten Ausnehmungen 5 um 90° versetzt zueinander angeordnet sind. Das durch die Steuerdruckleitung 17 in die beiden Druckkammer 6, 7 einspreisbare hydraulische Steuermedium ist vorgesehen, um den Anpreßdruck und somit die Abdichtwirkung der Diagonaldichtung 1 gegenüber den abzudichtenden Flächen bedarfsweise zu erhöhen.

Die Diagonaldichtung 1ist symmetrisch zur Symmetrieachse 8 ausgebildet, ebenso, wie auch die beiden Druckkammern 6, 7 spiegelbildlich zur Symmetrieachse 8 gestaltet sind.

Die Ausnehmungen 5 erstrecken sich jeweils im wesentlichen quer zur Symmetrieachse 8 und sind durch in Richtung der angrenzenden Gleitelemente 9, 10 offenen Nuten 16 gebildet.

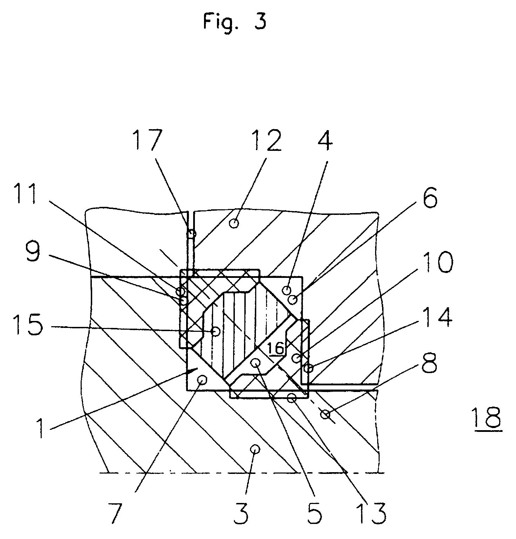

In Figur 3 ist die Diagonaldichtung 1 aus Figur 2 im herstellungsbedingten, elastisch nicht-vorgespannten Zustand gezeigt. Es ist zu erkennen, daß die Gleitflächen 11, 12, 13, 14 die jeweils angrenzenden, abzudichtenden Flächen von Rotor 3 und Stator 4 überdecken und daher, wie in Figur 2 gezeigt, diese im eingebauten Zustand unter elastischer Vorspannung dichtend berühren.

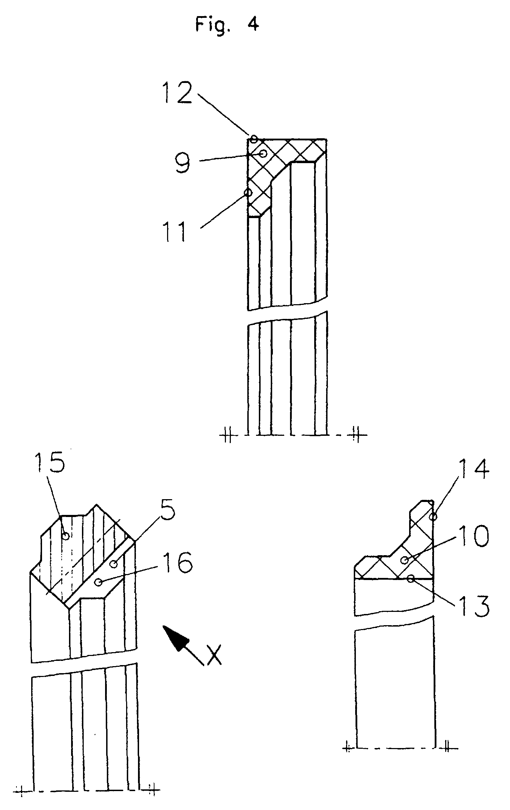

In Figur 4 sind die Einzelteile der Diagonaldichtung 1 gezeigt. Die Diagonaldichtung 1 besteht aus den beiden PTFE-Gleitelementen 9, 10 und dem elastomeren Anpreßelement 15, wobei die Ausnehmungen 5 innen- und außenseitig des Anpreßelements 15 angeordnet sind.

In Figur 5 ist die Ansicht X des Anpreßelements 15 aus Figur 4 gezeigt. Es ist zu erkennen, daß zwei nutförmig in Richtung des angrenzenden Gleitelements geöffnete Ausnehmungen 5 vorgesehen sind, die einander gegenüberliegend zugeordnet sind.

Der abzudichtende Raum ist mit dem Bezugszeichen 18 versehen.

## Patentansprüche

1. Dichtungsanordnung, umfassen eine Diagonaldichtung, die in einem kreisringförmigen, druckbeaufschlagbaren Einbauraum mit im wesentlichen rechteckigem Querschnitt angeordnet ist, wobei der Einbauraum durch einen stufenförmig abgesetzten Rotor eines Schwenkantriebs und ein als Stator ausgebildetes Gehäuse mit einer stufenförmig abgesetzten Bohrung begrenzt ist, wobei der Stator den Rotor konzentrisch umschließt und wobei die Diagonaldichtung von zumindest einer Ausnehmung durchdrungen ist, die zwei Druckkammern verbindet, die beiderseits einer durch die Diagonaldichtung verlaufenden Symmetriachse im Einbauraum angeordnet sind, **dadurch gekennzeichnet, daß** die Diagonaldichtung (1) aus zwei einander im Einbauraum (2) diagonal gegenüberliegend angeordneten Gleitelementen (9, 10) mit im wesentlichen dreieckförmigem Querschnitt besteht, die mit ihren Gleitflächen (11, 12, 13, 14) jeweils den Rotor (3) und den Stator (4) unter elastischer Vorspannung dichtend berühren und daß die Gleitelemente (9, 10) durch ein Anpreßelement (15) aus elastomerem Werkstoff aufeinander abgestützt sind.

2. Dichtungs Anordnung nach Anspruch 1, **dadurch gekennzeichnet, daß** sich die Ausnehmung (5) im wesentlichen quer zur Symmtrieachse (8) erstreckt.

3. Dichtungsanordnung nach einem der Ansprüche 1 oder 2, **dadurch gekennzeichnet, daß** die Ausnehmung (5) im Anpreßelement (15) angeordnet ist.

4. Dichtungsanordnung nach einem der Ansprüche 1 bis 3, **dadurch gekennzeichnet, daß** die Ausnehmung (5) durch eine in Richtung des **angrenzenden Gleitelements** (9, 10) offene Nut (16) gebildet ist.

5. Dichtungsanordnung nach einem der Ansprüche 1 bis 4, **dadurch gekennzeichnet, daß** das Anpreßelement (15) und die Gleitelemente (9, 10) formschlüssig verbunden sind.

6. Dichtungsanordnung nach einem der Ansprüche 1 bis 5, **dadurch gekennzeichnet, daß** die Gleitelemente (9, 10) aus PTFE bestehen.

7. Dichtungsanordnung nach einem der Ansprüche 1 bis 6, **dadurch gekennzeichnet, daß** zumindest eine der Druckkammem (6, 7) mit einer Steuerdruckleitung (17) verbunden ist.

8. Dichtungsanordnung nach einem der Ansprüche 1 bis 7, **dadurch gekennzeichnet, daß** der abzudichtende Raum (18) in axialer Richtung beiderseits durch identisch ausgebildete Diagonaldichtungen (1) abgedichtet ist.

## Claims

1. A sealing arrangement, comprising a diagonal seal which is arranged in a circular installation space which can be pressurized and has an essentially rectangular cross section, the installation space being bounded by a rotor of a pivoting drive, the rotor being offset in a stepped manner, and a housing which is designed as a stator and has a hole offset in a stepped manner, the stator concentrically surrounding the rotor and the diagonal seal being penetrated by at least one recess which connects two pressure chambers which are arranged in the installation space on both sides of an axis of symmetry running through the diagonal seal, **characterized in that** the diagonal seal (1) comprises two sliding elements (9, 10) which are arranged diagonally opposite each other in the installation space (2), have an essentially triangular cross section and, with their sealing surfaces (11, 12, 13, 14), are in each case in sealing contact, under elastic prestress, with the rotor (3) and the stator (4), and **in that** the sliding elements (9, 10) are supported on each other by a pressing element (15) of elastomeric material.

2. A sealing arrangement according to claim 1, **characterized in that** the recess (5) extends essentially transversely to the axis of symmetry (8).

3. A sealing arrangement according to either of claims 1 and 2, **characterized in that** the recess (5) is arranged in the pressing element (15).

4. A sealing arrangement according to any one of claims 1 to 3, **characterized in that** the recess (5) is formed by a groove (16) which is open in the direction of the adjacent sliding element (9, 10).

5. A sealing arrangement according to any one of claims 1 to 4, **characterized in that** the pressing element (15) and the sliding elements (9, 10) are connected in a form-fitting manner.

6. A sealing arrangement according to any one of claims 1 to 5, **characterized in that** the sliding elements (9, 10) consist of PTFE.

7. A sealing arrangement according to any one of claims 1 to 6, **characterized in that** at least one of the pressure chambers (6, 7) is connected to a control pressure line (17).

8. A sealing arrangement according to any one of claims 1 to 7, **characterized in that** the space (18) which is to be sealed is sealed in the axial direction on both sides by diagonal seals (1) of identical design.

## Revendications

1. Dispositif de joint comprenant un joint d'étanchéité en diagonale situé dans un espace de montage en forme annulaire et à section transversale essentiellement rectangulaire qui peut être alimenté en pression, l'espace de montage étant limité par un rotor d'un servo-moteur à fraction de tour étagé de manière à former un gradin et un boîtier exécuté en tant que stator pourvu d'un alésage étagé de manière à former un gradin, le stator entourant le rotor de manière concentrique et le joint d'étanchéité en diagonale étant traversé par au moins un évidemment qui relie deux chambres de pression situées dans l'espace de montage sur les deux côtés d'un axe de symétrie passant à travers le joint d'étanchéité en diagonale, **caractérisé en ce que** le joint d'étanchéité en diagonale (1) est formé de deux éléments glissants (9, 10) de section transversale essentiellement triangulaire situés de manière diamétralement opposée l'un par rapport à l'autre dans l'espace de montage (2) et dont les surfaces de glissement (11, 12, 13, 14) sont en contact étanche, sous l'effet d'une précontrainte élastique, avec le rotor (3) et le stator (4) respectivement, et **en ce que** les éléments glissants (9, 10) sont appuyés l'un sur l'autre grâce à un élément de pression (15) en matière élastomère.

2. Dispositif de joint selon la revendication 1, **caractérisé en ce que** l'évidement (5) s'étend de manière essentiellement transversale par rapport à l'axe de symétrie (8).

3. Dispositif de joint selon l'une des revendications 1 ou 2, **caractérisé en ce que** l'évidement (5) est situé dans l'élément de pression (15).

4. Dispositif de joint selon l'une des revendications 1 à 3, **caractérisé en ce que** l'évidement (5) est formé par une rainure (16) ouverte en direction de l'élément glissant (9, 10) contigu.

5. Dispositif de joint selon l'une des revendications 1 à 4, **caractérisé en ce que** l'élément de pression (15) et les éléments glissants (9, 10) sont reliés par conjugaison de forme.

6. Dispositif de joint selon l'une des revendications 1 à 5, **caractérisé en ce que** les éléments glissants (9, 10) sont en PTFE.

7. Dispositif de joint selon l'une des revendications 1 à 6, **caractérisé en ce qu'**au moins une des chambres de pression (6, 7) est reliée à une conduite de pression de commande (17).

8. Dispositif de joint selon l'une des revendications 1 à 7, **caractérisé en ce que** l'espace à étanchéifier (18) est rendu étanche sur les deux côtés, dans la direction axiale, par des joints d'étanchéité en diagonale (1) exécutés de manière identique.
